# EUROPÄISCHE PATENTANMELDUNG

(11) **EP 3 492 300 A1**
(43) Veröffentlichungstag der Anmeldung: **05.06.2019**
(21) Anmeldenummer: 18200871.4
(22) Anmeldetag: 17.10.2018
(51) Int. Cl.: B60L 1/00, B60L 15/00, B60L 53/14, B60L 53/22, B60L 50/51, B60L 50/72, B60L 50/75, B60L 58/40, H01M 8/00

(54) **BRENNSTOFFZELLEN PLUG-IN-HYBRID FAHRZEUG MIT LADEGERÄT FÜR EINE BATTERIELADUNG AUS DEM NETZ**

(30) Priorität: 29.11.2017 DE 102017221370
(71) Anmelder: Ford Global Technologies, LLC, Dearborn, MI 48126 (US)
(72) Erfinder: Orozco Santos Coy, Julio, 52078 Aachen (DE); Sponheimer, Arnulf, 52072 Aachen (DE)
(74) Vertreter: Dörfler, Thomas

(57) **Zusammenfassung**

In einem Brennstoffzellen Plug-in Hybrid-Fahrzeug mit einer Brennstoffzelle (20), die eine Anodenseite (19) und eine Kathodenseite (21) hat, mit einem Kompressor (34), der über eine Luftzuleitung (33) mit der Kathodenseite (21) verbunden ist, mit einem elektrischen Motor (36), der in Antriebsverbindung ausschließlich mit dem Kompressor (34) ist, mit einem Konverter (38), der elektrisch einerseits mit dem Motor (36) und andererseits mit einer Hochvoltbatterie (42) verbunden ist, und mit einer Steuerung (60), die das Fahrzeug in zwei unterschiedliche Betriebszustände schaltet, versorgt in einem 1. Betriebszustand die Hochvoltbatterie (42) über den Konverter (38) den Motor (36) mit elektrischer Leistung, sodass der elektrische Motor (36) den Kompressor (34) antreibt. In einem 2. Betriebszustand wird dem Motor (36) oder dem Konverter (38) über eine Stromzuleitung (70) eine elektrische Spannung aus einem Netz zugeleitet. Der Motor (36) kann vorzugsweise die Netzspannung in ihrer Amplitude verändern. Die gegebenenfalls veränderte Spannung liegt an dem Konverter (38) an, der sie in eine Gleichspannung umformt, die an der Hochvoltbatterie (42) anliegt.

## Beschreibung

Die Erfindung betrifft ein Brennstoffzellen Plug-in-Hybrid Fahrzeug mit Ladegerät für eine Batterieladung aus dem Netz. Unter einem Plug-in Elektrofahrzeug wird ein Kraftfahrzeug verstanden, das über eine äußere elektrische Energiequelle, wie beispielsweise eine Steckdose, mit elektrischer Energie versorgt werden kann, die in wiederaufladbaren Batterien des Kraftfahrzeugs gespeichert wird und später für die Stromversorgung des elektrischen Antriebsmotors des Kraftfahrzeugs zur Verfügung steht. Derartige Plug-in Elektrofahrzeuge werden häufig als PEVs bezeichnet. Sie sind eine Untergruppe der Elektrofahrzeuge, zu denen unter anderem die sogenannten BEVs, also elektrische Batteriefahrzeuge und Plug-in Hybrid-Fahrzeuge gehören.

Brennstoffzellen Plug-in Hybrid-Fahrzeuge haben zusätzlich zu Plug-in Elektrofahrzeugen an Bord eine Brennstoffzelle, die eine elektrische Leistung zur Verfügung stellt. Sie haben in der Regel auch eine Hochspannungsbatterie an Bord, die als Speicher für die elektrische Energie dient. Diese Hochspannungsbatterie wird über die Brennstoffzelle aufgeladen und kann über ein Stromkabel mit einer äußeren elektrischen Energiequelle verbunden werden, so dass sie aus dem Netz aufgeladen wird. Dadurch stehen zwei unterschiedliche Möglichkeiten der Aufladung wahlweise zur Verfügung.

Für die Zufuhr elektrischer Leistung von außen über das Stromkabel ist es notwendig, ein Ladegerät zur Verfügung zu haben, das sich vorzugsweise an Bord des Fahrzeugs befindet. Dieses Ladegerät setzt die über das Stromkabel bezogene Speisespannung um in die für die Hochspannungsbatterie geeignete Ladespannung und richtet sie gleich. Dabei wird auch der Ladevorgang gesteuert, wie dies bei Ladegeräten aus dem Stand der Technik bekannt ist. Die Speisespannung ist in der Regel eine Wechselspannung. Vorzugsweise liegt sie als 3-phasige Wechselspannung, also Drehstrom bei 380 V, vor. Sie muss einerseits auf die für die Ladespannung benötigte Amplitude umgesetzt werden, andererseits muss sie gleichgerichtet werden.

Wenn ein derartiges Ladegerät im Fahrzeug vorgesehen ist, bedeutet dies Kosten, Gewicht und zusätzlichen Platzbedarf, also Bauraum. Gerade bei in hoher Stückzahl gefertigten Kraftfahrzeugen sind diese Bedingungen zu beachten, denn sie führen zu höheren Kosten und größeren Abmessungen für das Kraftfahrzeug.

Wenn das Ladegerät für die volle Leistung, mit der die Hochspannungsbatterie des Kraftfahrzeugs geladen werden kann, ausgelegt ist, ist es relativ groß, schwer und teuer. Man geht daher in der Regel dazu über, das an Bord befindliche Ladegerät für eine geringere Leistung auszulegen. Dies bedeutet aber, dass die Ladezeit verlängert wird. Ein Ladegerät benötigt üblicherweise einen Transformator und/oder eine Elektronik mit Gleichrichtern und Steuerteilen. Gerade die Transformatoren sind für die hier relevanten Leistungen ausgesprochen schwer. Das hohe Gewicht ist für den ständigen Transport in einem Kraftfahrzeug nachteilig. Unter einem Transformator wird ein Spannungswandler für Wechselspannung verstanden.

Aus der US 5,099,186 A ist ein kombiniertes System für elektrischen Fahrantrieb und Batterieladung bekannt. Im Fahrbetrieb wird der elektrische Antriebsmotor des Kraftfahrzeugs von einer Hochvoltbatterie gespeist und liefert das für den Fahrbetrieb benötigte Drehmoment. Im Aufladebetrieb dient der Antriebsmotor als Spannungswandler, er setzt die von außen bezogene Netzspannung um in eine Spannung, wie sie - nach Gleichrichtung - die Hochvoltbatterie für die Ladung benötigt. Dadurch wird ein separater Transformator eingespart.

Aus der WO 2011/159 241 A ist es bekannt, den Konverter und Teilbereiche der Wicklung des elektrischen Antriebsmotors des Kraftfahrzeugs für Phase 1 Ladestandard zu nutzen. Die Anwendung von Phase 3 Ladung bei diesem Vorschlag würde zwar die Verwendung von Schaltern für die Verbindung zum elektrischen Netz vereinfachen, aber ein Drehmoment im Rotor des elektrischen Antriebsmotors hervorrufen. Es würde damit den zusätzlichen Schritt eines Abkuppeln des Motors vom Antriebsstrang erfordern.

Zum weiteren Stand der Technik, der ebenfalls den Antriebsmotor als Transformator für die Spannungsänderung für die Batterieladung nutzt, wird auf US 4,920, 475 A und WO 2010/057 893 A verwiesen.
Zum Stand der Technik für mit einer Brennstoffzelle ausgerüstete Kraftfahrzeuge wird auf US 2007/0287046 A1, US 7,743,861 B2 und JP 2005310429 A verwiesen.

Die Offenbarungsgehalte des genannten Standes der Technik gehören zum Offenbarungsgehalt der vorliegenden Anmeldung.

Hier setzt nun die Erfindung ein. Sie hat es sich zur Aufgabe gemacht, Plug-in Hybrid-Fahrzeuge mit Brennstoffzelle dahingehend weiterzuentwickeln, dass eine Alternative dafür angegeben wird, ein separates Ladegerät an Bord entfallen zu lassen, jedenfalls Kosten, Gewicht und Bauraum für dieses spezielle Ladegerät zumindest gering werden, dabei aber die Nachteile der vorbekannten Ladegeräte nach dem Stand der Technik vermieden werden und insbesondere das Ladegerät auf volle Ladeleistung ausgelegt werden kann.

Diese Aufgabe wird gelöst durch ein Fahrzeug mit den Merkmalen des Anspruchs 1.

Die Erfindung geht davon aus, dass mit Brennstoffzellen arbeitende Kraftfahrzeuge in der Regel einen Kompressor für die Einspeisung von Luft in die Kathodenseite der Brennstoffzelle aufweisen. Der Kompressor kann auch als Turbolader ausgeführt sein. Er wird über einen mit ihm drehverbundenen Elektromotor angetrieben. Letzterer ist typischerweise für eine Leistung von 12 KW und höher ausgelegt. Er ist mit der Hochspannungsbatterie, HV-Batterie genannt, elektrisch verbunden. Diese wird über die Brennstoffzellenanordnung oder die Stromversorgung aus dem Netz von außen über das Stromkabel geladen. Die HV-Batterie ist üblicherweise für eine Spannung von 280 V und darüber ausgelegt. Sie ist über einen Konverter und Motorcontroller mit dem Elektromotor elektrisch verbunden.

Die Erfindung nutzt die ohnehin vorhandene Leistungselektronik des Konverters und auch den Elektromotor des Kompressors für den Ladevorgang. Dabei kommt vorteilhaft zugute, dass die Leistung, für die der Konverter und auch der Elektromotor ausgelegt sind, im Wesentlichen im selben Leistungsbereich liegt wie ein Ladegerät.

Die Leistungselektronik des Konverters und der Elektromotor werden in einem 1. Betriebszustand für die Energieversorgung des Antriebsmotors aus der Brennstoffzelle und in einem 2. Betriebszustand für den Ladevorgang der HV-Batterie eingesetzt. Hierbei macht man sich zunutze, dass beide Betriebszustände in der Regel nicht gleichzeitig anfallen. Zwar ist es grundsätzlich möglich, dass die HV-Batterie eines mit einem Stromkabel an ein äußeres Versorgungsnetz angeschlossenen Plug-in Hybrid-Fahrzeugs während dieses Ladevorgangs aus dem Versorgungsnetz zugleich auch über die Brennstoffzelle elektrische Energie erhält, diese Doppelversorgung ist aber zu vernachlässigen und wenig praktikabel, da die Energieversorgung über das äußere Netz wesentlich wirtschaftlicher ist und daher es in der Praxis keinen Nachteil darstellt, wenn, wie dies bei der Erfindung der Fall ist, beide Betriebszustände nicht gleichzeitig durchgeführt werden können. Zudem ermöglicht es die Erfindung, die volle Ladeleistung aus dem Netz zu beziehen, sodass für eine zusätzliche Ladung der Batterie über die Brennstoffzelle kein Raum mehr ist.

Die Erfindung schlägt damit für die Brennstoffzellen Plug-in Hybrid-Fahrzeuge vor, dass der Konverter des Kompressors so ausgelegt wird, dass er auch für ein im Hochspannungsbereich arbeitendes Ladegerät für die Plug-in Funktion verwendet werden kann, also benutzt werden kann, um die HV-Batterie gemäß Level 1, 2 und 3 Ladestandard zu laden.

Gemäß der Erfindung werden der Konverter des Kompressors und der Elektromotor des Kompressors für die vorzugsweise 3-phasige Ladung verwendet. Dadurch kann der Ladevorgang ohne zusätzliche Sicherheitsmaßnahmen erfolgen, da das hervorgerufene Drehmoment lediglich den Impeller des Kompressors antreibt und die Turbine mit der Netzfrequenz umläuft, dies sind bei 50 Hz Netzfrequenz etwa 3000 Umdrehungen/min.

Um zu vermeiden, dass Luft durch die Kathode der Brennstoffzelle gefördert wird, wenn die Brennstoffzelle nicht im Betrieb ist und die HV-Batterie über das Netz von außen geladen wird, was zu Korrosionseffekten und einer Verschlechterung der katalytischen Schicht der PEM-Membrane der Brennstoffzelle führt, wird vorgeschlagen, ein häufig ohnehin schon vorhandenes Ventil, z.B. ein Absperrventil, oder ein Bypassventil, beispielsweise eine Drosselklappe oder ein handelsübliches Ventil, jeweils insbesondere aus der Kraftfahrzeugtechnik, einzusetzen, das im Ladebetrieb den Luftweg zur Brennstoffzelle sperrt und/oder die gesamte durch den mit Netzfrequenz umlaufenden Impeller geförderte Luft nach außen leitet.

Indem speziell die Kombination aus Konverter und Elektromotor des Kompressors, welche ohnehin für die Luftversorgung der Brennstoffzelle vorhanden sein muss, auch für den Ladevorgang verwendet wird, ermöglicht dies eine Ladung insbesondere mit 3 Phasen Strom, ohne spezielle Vorkehrungen für die Sicherheit erforderlich zu machen.

Die Erfindung schlägt in einer Weiterbildung vor, dass der erfindungsgemäß doppelt genutzte Konverter für den Leistungsbereich ausgelegt wird, der die höhere Leistungsanforderung hat. Dadurch kann er sowohl für den Ladevorgang als auch für den normalen Fahrbetrieb, bei dem die Brennstoffzelle den Antriebsmotor mit elektrischer Leistung versorgt, benutzt werden.

In einer Weiterbildung wird eine HV-Batterie eingesetzt, deren Spannungswert dem gleichgerichteten, an der Batterie anliegenden Spannungswert der für den Ladevorgang verwendeten Netzspannung entspricht. Wenn beispielsweise eine 3-phasige Netzspannung mit einer 3 Puls Gleichrichtung verwendet wird, also in jeder der 3 Phasen jeweils nur ein Gleichrichter vorgesehen ist, liegt erhaltene Spannung bei etwa 445 V Gleichspannung. Sie liegt an der Batterie an. Bei einer höheren Anzahl von Gleichrichtern, zum Beispiel Brückenschaltung, werden höhere Ausgangsspannungen erreicht. Es wird in diesem Spezialfall keine Umsetzung des Spannungspegels, also der Amplitude, benötigt. Es entfällt also in diesem Spezialfall ein Transformator, der beispielsweise durch den Elektromotor realisiert ist. Es wird nur der Konverter benötigt. Dieser ist mit einer geeigneten Umschaltvorrichtung ausgestattet.

In einer Weiterbildung der Erfindung ist die Ausgangswelle des Elektromotors ausschließlich mit dem Kompressor verbunden. Damit treibt er nicht auch noch andere Vorrichtungen an, die dann im Ladezustand passiviert werden müssten, um ein Drehen zu verhindern.

Zwei Ausführungsbeispiele der Erfindung, die nicht einschränkend zu verstehen sind, werden im Folgenden näher beschrieben und unter Bezugnahme auf die Zeichnung erläutert. In dieser Zeichnung zeigen:
- Fig. 1:: ein prinzipielles Schaltbild einer Architektur für eine Anordnung mit einer Brennstoffzelle und einer elektrischen Ladeeinheit für ein Plug-In-Hybridfahrzeug,
- Fig. 2:: ein prinzipielles Schaltbild wie Figur 1, jedoch ohne mechanische Kopplung von Kompressor und Turbine,
- Fig. 3:: ein prinzipielles Schaltbild wie Figur 1 und für den Sonderfall, dass keine Umsetzung der Amplitude der Netzspannung in die Batterieladespannung erfolgen muss, und
- Fig. 4: ein Schaltbild einer elektrischen Ladeeinheit eines Plug-In-Hybridfahrzeugs.

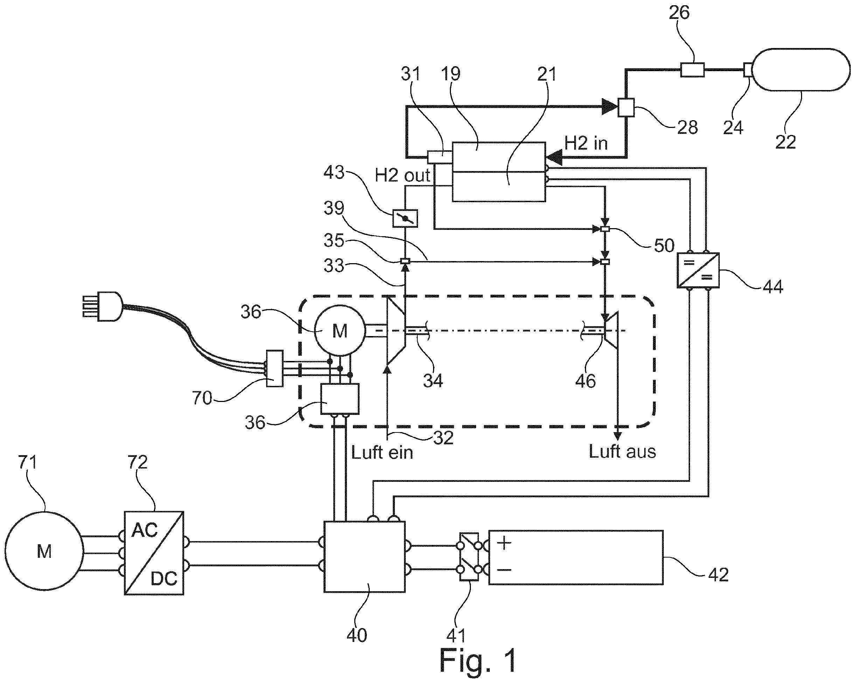

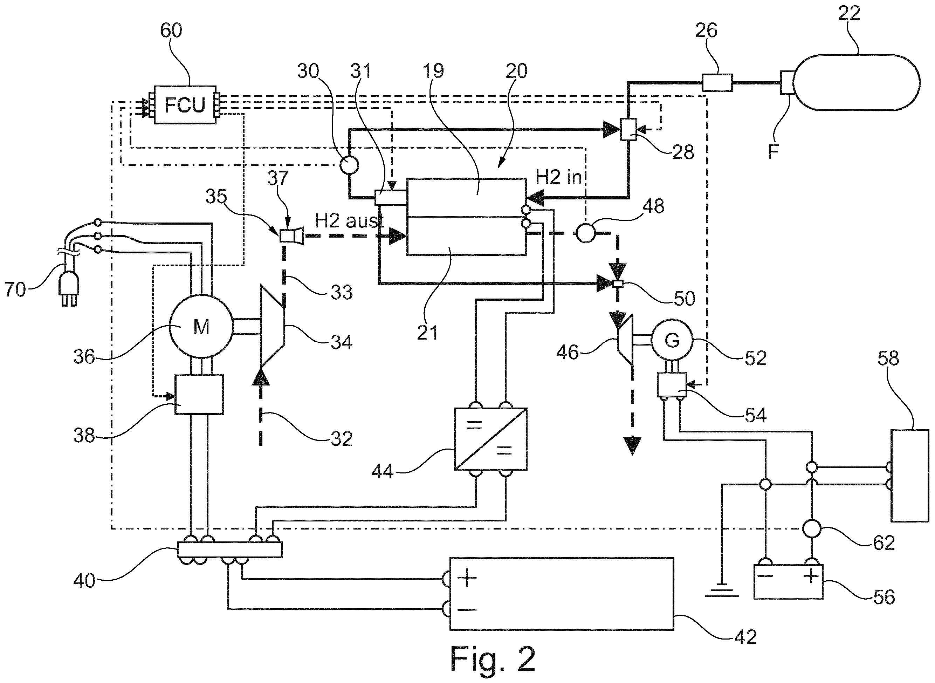

Die Figuren 1 bis 3 zeigen eine Wasserstoff-Brennstoffzelle 20, sie ist schematisch dargestellt. Jeweils in der Figur oben befindet sich die Anodenseite 19 bzw. Wasserstoffseite, darunter ist die Kathodenseite 21, auch Luftseite genannt. Diese Seiten werden in Gegenrichtung durchströmt. Die Anodenseite 19 wird mit Wasserstoff versorgt. Hierfür ist ein Wasserstofftank 22 vorgesehen (siehe Figur 1), in dem Gas unter hohem Druck gespeichert ist. Er ist über ein Tankventil 24 abschließbar und dort mit einer Zuführleitung verbunden. In diese ist ein Druckregler 26 eingefügt. Die Zuführleitung mündet in die Anodenseite 19, in die Zuführleitung ist noch eine Strahlpumpe 28 eingefügt. Sie kann auch als Zirkulationspumpe oder Gebläse ausgebildet sein. Sie dient dazu, aus der Anodenseite abströmendes Wasserstoffgas, das in einer Abgasleitung geführt ist, anzusaugen und wieder in die Zuführleitung im Bereich der Strahlpumpe 28 einzuspeisen. In der Abgasleitung ist gemäß Fig. 2 noch ein Drucksensor 30 vorgesehen, er erfasst den Abgasdruck am Ausgang der Anodenseite 19. Es kann auch ein Differenzdruckmesser vorgesehen sein, der den Differenzdruck zwischen der Anode und der Kathode erfasst.

Die Figuren 1 bis 3 zeigen nun zudem folgendes: Die Kathodenseite 21 wird mit Luft beladen. Hierzu wird über einen Lufteinlass 32 durch einen Kompressor 34 Luft angesaugt. Eine Zuluftleitung 33 führt vom Kompressor 34 zur Kathodenseite 21. In diese Zuluftleitung 33 ist in den Ausführungen nach Figur 1 und 2 ein Ventil 35, das hier als 2-Wegeventil ausgeführt ist, eingefügt. Figur 2 zeigt nun folgendes: In einer 1. Ventilstellung ist der Weg vom Kompressor 34 zur Kathodenseite 21 frei, der Weg zu einem Auslass 37 dagegen gesperrt. In der 2. Ventilstellung ist der Weg vom Kompressor 34 zum Auslass 37 frei, der Weg vom Kompressor 34 zur Kathodenseite 21 gesperrt. In einer Alternative wird ein Bypassventil parallel zur Kathodenseite 21 angeordnet. Wenn der Bypass geöffnet ist, strömt praktisch alle Luft durch den Bypass, so dass die Brennstoffzelle 20 nicht durchströmt wird. Eine derartige Alternative zeigt Fig. 1. Gemäß Figur 1 wird die vom Kompressor 34 gelieferte Luft wahlweise über das Ventil 35 entweder zur Kathodenseite 21 oder in eine System-Bypassleitung 39 geleitet. Diese führt zu einem zweiten Ventil 45, das in eine Abluftleitung eingefügt ist, die den Ausgang der Kathodenseite 21 mit einer Turbine 46 verbindet. Zwischen Ventil 35 und der Kathodenseite 21 ist eine Drosselklappe 43 eingefügt. Das Ventil 35 kann auch Zwischenstellungen zulassen.

In den Figuren 1 bis 3 wird der Kompressor 34 über einen Motor M 36 angetrieben. Elektrisch ist ihm ein Konverter 38 vorgeschaltet (siehe Figuren 1 und 2), der auch zusätzlich die Funktion der Motorsteuerung hat. Er ist primärseitig an eine Verteilerbox 40 angeschlossen, die wiederum mit einer Hochvolt-Batterie 42 in Verbindung ist.

In der Ausführung gemäß Figur 1 ist zwischen der Verteilerbox 40 und der Hochvolt-Batterie 42 ein Kontaktschalter 41 eingefügt.

Gemäß den Figuren 1 und 2 ist an die Verteilerbox 40 auch der Ausgang eines DC/DC Konverter 44 angeschlossen. Dieser ist eingangsseitig mit der Brennstoffzelle 20 verbunden. Die von der Brennstoffzelle 20 erzeugte elektrische Leistung wird über den Konverter 44 entnommen und schließlich der Hochvolt-Batterie 42 zu deren Ladung zugeführt. Von dort kann die für den Antrieb des Fahrzeugs benötigte elektrische Leistung entnommen werden, wie Figur 1 zeigt. Dort ist an die Verteilerbox 40 ein Inverter 72 angeschlossen, der seinerseits mit einer elektrischen Antriebsmaschine 71 für den Fahrantrieb verbunden ist.

Ausgangsseitig strömt die Luft aus der Kathodenseite 21 durch die Abluftleitung zu der Turbine 46. Diese wird durch die kinetische Energie der Abluft in Drehung versetzt, die Luft strömt an einem Luftauslass aus. In die Abluftleitung kann ein Kathoden-Drucksensor 48 eingefügt sein, siehe Figur 2.

Am Ausgang der Anodenseite 19 ist ein Spülventil 31 angeordnet, es ist hier in der Ausführung direkt mit der Brennstoffzelle 20 verbunden. Ein Spülausgang dieses Spülventils 31 ist mit einem Sammelpunkt 50 verbunden (siehe Figuren 1 und 2), mit dem auch die Abluftleitung in Verbindung steht. Auf diese Weise strömt bei Spülung Wasserstoffgas gemeinsam mit der Abluft und erreicht gemeinsam mit dieser die Turbine 46. Auf diese Weise wird auch die kinetische Energie des Spülgases genutzt.

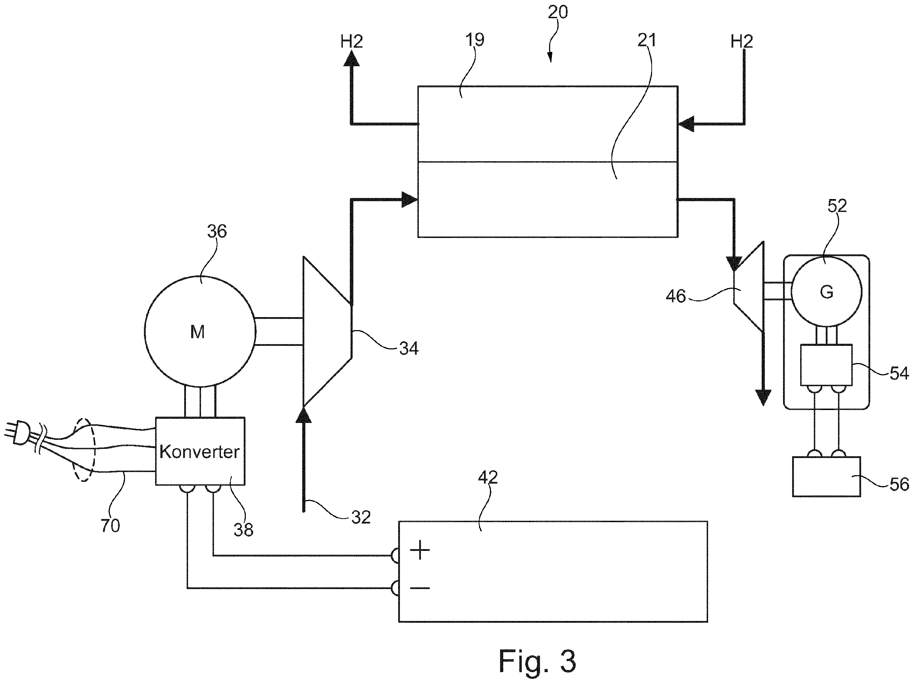

Gemäß Figur 1 sind der Kompressor 34 und die Turbine 36 drehverbunden. Gemäß Figur 2 und 3 ist dies nicht der Fall, die Turbine 46 ist dort mit einem Generator G 52 antriebsverbunden, sie treibt diesen Generator 52 an. Der Generator 52 wird ausschließlich durch die Turbine 46 angetrieben und ist ausschließlich mit ihr drehverbunden. Nachgeschaltet ist dem Generator 52 ein Inverter 54, der zugleich auch noch als Steuergerät für den Generator 52 ausgebildet ist. Sein Ausgang ist mit einer Niederspannungsbatterie 56 verbunden. Zugleich ist er mit bei Niederspannung arbeitenden Verbrauchern 58 verbunden, die hier nicht näher dargestellt sind. Es handelt sich insbesondere um Vorrichtungen, die unmittelbar zur Brennstoffzelle 20 gehören.

Unter Niederspannung wird eine Spannung nicht über 48 V verstanden. Eine Niederspannung ist eine Spannung, mit der ein Mensch ohne wirkliche Probleme zu bekommen in Kontakt kommen kann.

Gesteuert wird die Anordnung gemäß Figur 2 durch einen Kontroller FCU 60, der die gesamte Anordnung überwacht und steuert. Hierzu ist er über gestrichelte Steuerleitungen mit einzelnen Bauteilen, insbesondere dem Inverter 54, der Strahlpumpe 28, dem Spülventil 31 und dem Konverter 38 verbunden. Seine Eingangssignale erhält er über strichpunktierte Leitungen, hier sind beispielhaft dargestellt eine Eingangsleitung für den Drucksensor (Kathode) 48, eine Eingangsleitung für den Drucksensor (Anode) 30 und eine Eingangsleitung für einen Spannungssensor 62 auf der Plusseite der Niederspannungsbatterie 56. Deren Minusseite ist auf Masse gelegt. Vorzugsweise ist auch eine Eingangsleitung vorgesehen, die vom Konverter 38 kommt und dessen Zustand, insbesondere Schaltzustand, überträgt.

Der Motor M 36 hat in üblicher Weise einen Stator und einen Rotor. Beide haben jeweils Wicklungen. Beispielsweise sind die 3 Wicklungen des Rotors mit dem Konverter 38 verbunden. Die drei Wicklungen des Stators sind mit einer Stromzuleitung 70 verbunden. Sie endet in einem Stecker. Es kann aber auch andersherum sein, also die Stromzuleitung mit den Wicklungen des Rotors verbunden sein, der Stator ist dann mit dem Konverter 38 verbunden. Es ist möglich, dass Stator und/oder Rotor für jede der drei Wicklungen mehr als eine Einzelwicklung oder Abgriffe der Wicklungen aufweisen. Dabei wird pro Phase eine der Einzelwicklungen oder die Gesamtwicklung für einen Zustand, z.B. den 1. Betriebszustand, der ein Fahrzustand ist, verwendet, während die andere Einzelwicklung bzw. der Teil zwischen Abgriff und einem Wicklungsende für den zweiten Betriebszustand verwendet wird. Die Einzelwicklungen bzw. die Abgriffe werden jeweils so gewählt, dass für den 1. Betriebszustand die optimale Leistung der Brennstoffzelle und für den 2. Betriebszustand die gewünschte Umsetzung der Amplituden erreicht wird.

Für den Fall, dass keine dreiphasige Netzspannung vorliegt, sondern zum Beispiel nur eine einphasige, wird analog verfahren.

Das in die Luftzuleitung 33 eingefügte Ventil 35 hat vorzugsweise einen motorischen Antrieb, der mit dem Steuergerät 60 in Verbindung ist und von diesem gesteuert wird.

Vorzugsweise ist mindestens ein Spannungsfühler vorgesehen, der mit einer elektrischen Zuleitung des Motors 36 verbunden ist und elektrisch am Steuergerät 60 angeschlossen ist. Wenn der Spannungsfühler eine elektrische Netzspannung in der Spannungszuleitung 70 erfasst, führt dies dazu, dass das Steuergerät den 2. Betriebszustand vorgibt.

In der Ausbildung nach Figur 3 ist der Sonderfall gezeigt, dass eine Umsetzung des Spannungswertes der Netzspannung zur Batterieladespannung nicht erforderlich ist. Dieser Sonderfall ist möglich, wenn die Spannung der HV-Batterie 42 so gewählt ist, dass sie einem gleichgerichteten Spannungswert der aus dem Netz bezogenen Wechselspannung entspricht. Durch Auswahl der Art der Gleichrichtung, beispielsweise nur einem Gleichrichter pro Phase, einem Brückengleichrichter, oder gar einer Spannungsvervielfachung im Bereich der Gleichrichter ist eine gewisse konstruktive Freiheit für die Auswahl der Spannung der HV-Batterie 42 gegeben.

Gemäß den Figuren 1 bis 3 ist der Konverter 38 3-phasig sowohl mit dem Motor M 36 des Kompressors 34 als auch mit der Stromzuleitung 70 verbunden. Im Konverter 38 sind vorzugsweise Schalter vorgesehen, die durch den Controller 60 (siehe Figur 2) oder andere Stellmittel in die beiden Betriebszustände geschaltet werden. So versorgt im 1. Betriebszustand die Hochvoltbatterie 42 über den Konverter 38 den Motor 36 mit elektrischer Leistung. In einem 2. Betriebszustand, der einer 2. Schaltstellung entspricht, wird über die Stromzuleitung 70 elektrische Leistung aus einem Netz der HV-Batterie 42 zugeleitet. Bei einer Netzspannung von 380 V Drehstrom (dreiphasig) kann dann, wenn in jeder Phase (nur) eine Diode als Gleichrichter verwendet wird, sogenannte Einweggleichrichtung, ein Gleichspannungswert von ca. 445 V erhalten werden, auf diesen Wert plusminus 20 % ist die HV-Batterie 42 ausgelegt. Dabei ist im Konverter 38 noch eine spezielle Ladeelektronik vorgesehen, die die Gleichspannung so anpasst, dass für den jeweiligen Ladezustand der HV-Batterie 42 die zutreffende Spannung an der HV-Batterie 42 anliegt.

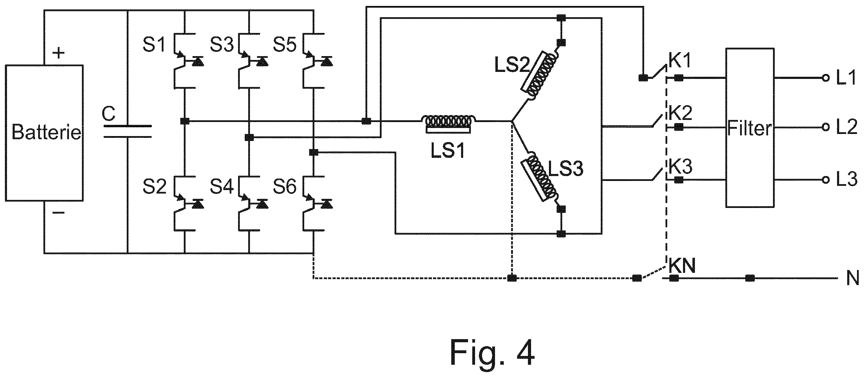

Figur 4 zeigt ein Schaltbild einer elektrischen Turboladeeinheit. Sie wird an ein externes 3-phasiges Netz (nicht dargestellt) angeschlossen, die Zuleitungen sind mit L1, L2 und L3 für die Phasen und N für den Nullleiter bezeichnet. Netzstörungen und dergleichen werden durch ein Filter eliminiert. Auf der Ausgangsseite des Filters sind die vier Zuleitungen an einen Vielfachschalter mit den vier Schaltzungen K1, K2, K3 und K4 angeschlossen. Während des Ladebetriebs der Hochvoltbatterie über das externe Netz ist der Vielfachschalter geschlossen. Wenn das externe Netz abgetrennt ist, sind alle Schaltzungen K1, K2, K3 und K4 geöffnet.

Die vier Zuleitungen münden in eine Brückenschaltung mit sechs elektrischen Hochleistungsschaltern S1 bis S6. Hier werden bevorzugt Bauelemente aus der Halbleitertechnik eingesetzt, beispielsweise Thyristoren oder Transistoren. Auf ihrer anderen Seite, der Gleichspannungsseite, ist diese Brückenschaltung mit der Hochvoltbatterie verbunden. Parallel zu den Hochleistungsschaltern S1 bis S6 ist dort ferner ein Kondensator geschaltet.

Mit den vier Zuleitungen und damit auf der Wechselspannungsseite ist eine als 3-Phasen Wechselstrommaschine ausgebildete Elektromaschine angeschlossen, die in der Figur 4 mit den 3 Induktivitäten LS1, LS2 und LS3 entsprechend der drei elektrischen Phasen dargestellt ist.

Figur 3 zeigt ein konkreteres Ausführungsbeispiel für die Verwendung einer 3 KW Lichtmaschine eines Kraftfahrzeugs im Zusammenhang mit einem steuerbaren Gleichrichter. Die Anodenseite und die Lufteingangsseite der Kathode sind wie in Figur 2 dargestellt, im Unterschied zu dieser Figur ist der erste Inverter 38 direkt mit der HV-Batterie 42 verbunden, es ist also keine Verteilerbox 40 vorgesehen. Auf der Abgasseite ist wiederum eine Turbine 46 vorgesehen, die nunmehr direkt mit der Lichtmaschine G mechanisch drehverbunden ist. Sie bildet hier ein Beispiel für eine spezielle Ausbildung des Generators 52. Nachgeschaltet ist der Lichtmaschine G ein steuerbarer Gleichrichter, z.B. ein Laderegler, der hier ein Beispiel für eine spezielle Ausbildung des zweiten Inverters 54 ist. Ausgangsseitig ist er mit einer Niederspannungsbatterie 56 verbunden.

Bei dem Verfahren zum Steuern des Brennstoffzellensystems wird ein Einstellwert für die Umlaufzahl des Kompressors 34 ermittelt durch Berücksichtigen eines Eingangswertes für die benötigte Leistung der Brennstoffzelle 20, eines Messwert des tatsächlichen Massenflusses an Luft, eines Messwertes des aktuellen Kathodendrucks 48 und eines Eingangswertes für die Spannung der Niedervoltbatterie 56. Basierend auf der aktuell benötigten Leistung der Brennstoffzelle 20 werden ein Wert für den Kathodendruck 48 und ein Stellwert für den Luftstrom berechnet. Es wird ein Entscheidungswert sowohl für den Mengenstrom an Luft als auch für den Kathodendruck bestimmt, wobei prioritär die angeforderte Leistung der Brennstoffzelle 20 und/oder die Batteriespannung der Niederspannungsbatterie 56 berücksichtigt

Das Brennstoffzellensystem eines Kraftfahrzeugs hat eine Brennstoffzelle 20, die eine Anodenseite und einer Kathodenseite aufweist, einen Kompressor 34, der mit einem Motor M 36 drehverbunden ist und über eine Zuleitung an die Kathodenseite der Brennstoffzelle 20 angeschlossen ist, und eine Turbine 46, die über eine Abluftleitung mit der Kathodenseite verbunden ist und die zudem ausschließlich mit einem Generator G 52 drehverbunden ist, der ausgangsseitig mit einem zweiten Inverter 54 und einer Niedervoltbatterie 56 verbunden ist.

In einem Brennstoffzellen Plug-in Hybrid-Fahrzeug mit einer Brennstoffzelle 20, die eine Anodenseite 19 und eine Kathodenseite 21 hat, mit einem Kompressor 34, der über eine Luftzuleitung 33 mit der Kathodenseite 21 verbunden ist, mit einem elektrischen Motor 36, der in Antriebsverbindung ausschließlich mit dem Kompressor 34 ist, mit einem Konverter 38, der elektrisch einerseits mit dem Motor 36 und andererseits mit einer Hochvoltbatterie 42 verbunden ist, und mit einer Steuerung 60, die das Fahrzeug in zwei unterschiedliche Betriebszustände schaltet, versorgt in einem 1. Betriebszustand die Hochvoltbatterie 42 über den Konverter 38 den Motor 36 mit elektrischer Leistung, sodass der elektrische Motor 36 den Kompressor 34 antreibt. In einem 2. Betriebszustand wird dem Motor 36 oder dem Konverter 38 über eine Stromzuleitung 70 eine elektrische Spannung aus einem Netz zugeleitet. Der Motor 36 kann vorzugsweise die Netzspannung in ihrer Amplitude verändern. Die gegebenenfalls veränderte Spannung liegt an dem Konverter 38 an, der sie in eine Gleichspannung umformt, die an der Hochvoltbatterie 42 anliegt.

### Bezugszeichenliste

- 19: Anodenseite
- 20: Brennstoffzelle
- 21: Kathodenseite
- 22: Wasserstofftank
- 24: Tankventil
- 26: Druckregler
- 28: Strahlpumpe
- 30: Drucksensor (Anode)
- 31: Spülventil
- 32: Lufteinlass
- 33: Zuluftleitung
- 34: Kompressor
- 35: Ventil
- 36: Motor M
- 37: Auslass
- 38: Konverter
- 39: Systembypassleitung
- 40: Verteilerbox
- 41: Kontakt-Schalter
- 42: HV-Batterie
- 43: Drosselklappe
- 44: DC/DC Konverter
- 45: zweites Ventil
- 46: Turbine
- 48: Drucksensor (Kathode)
- 50: Sammelpunkt
- 52: Generator G
- 54: Inverter
- 56: Niederspannungsbatterie
- 58: Verbraucher
- 60: Controller FCU
- 62: Spannungssensor
- 70: Stromzuleitung
- 71: elektrische Antriebsmaschine
- 72: Inverter von 71

## Patentansprüche

1. Brennstoffzellen Plug-in Hybrid-Fahrzeug
- mit einer Brennstoffzelle (20), die eine Anodenseite (19) und eine Kathodenseite (21) hat,
- mit einem Kompressor (34), der über eine Luftzuleitung (33) mit der Kathodenseite (21) verbunden ist,
- mit einem elektrischen Motor (36), der in Antriebsverbindung ausschließlich mit dem Kompressor (34) ist,
- mit einem Konverter (38), der elektrisch einerseits mit dem Motor (36) und andererseits mit einer Hochvoltbatterie (42) verbunden ist, und
- mit einer Steuerung (60), die das Fahrzeug in zwei unterschiedliche Betriebszustände schaltet,
- wobei in einem 1. Betriebszustand die Hochvoltbatterie (42) über den Konverter (38) den Motor (36) mit elektrischer Leistung versorgt, sodass der elektrische Motor (36) den Kompressor (34) antreibt und in einem 2. Betriebszustand entweder dem Motor (36) oder dem Konverter (38) über eine Stromzuleitung (70) eine elektrische Netzspannung aus einem Netz zugeleitet wird, wobei der Motor (36) gegebenenfalls die Netzspannung in ihrer Amplitude verändert und die veränderte Spannung an den Konverter (38) leitet, und der Konverter (38) die Spannung in eine Gleichspannung umformt, die an der Hochvoltbatterie (42) anliegt.

2. Fahrzeug nach Anspruch 1, **dadurch gekennzeichnet, dass** die Hochvoltbatterie (42) auf eine Spannung ausgelegt ist, die im Wesentlichen der gleichgerichteten Netzspannung entspricht.

3. Fahrzeug nach einem der vorangegangenen Ansprüche, **dadurch gekennzeichnet, dass** in die Luftzuleitung (33) ein Ventil (35) eingefügt ist, das zwei Stellungen hat, wobei in einer ersten Ventilstellung der Weg vom Kompressor (34) zur Kathodenseite (21) frei ist, der Weg zu einem Auslass (37) dagegen gesperrt ist und in der zweiten Ventilstellung der Weg vom Kompressor (34) zum Auslass (37) frei ist und der Weg vom Kompressor (34) zur Kathodenseite (21) gesperrt ist.

4. Fahrzeug nach einem der vorangegangenen Ansprüche, **dadurch gekennzeichnet, dass** in die Luftzuleitung (33) ein Ventil (35) eingefügt ist, das einen motorischen Antrieb hat, der mit dem Steuergerät (60) in Verbindung ist und von diesem gesteuert wird.

5. Fahrzeug nach einem der vorangegangenen Ansprüche, **dadurch gekennzeichnet, dass** der Motor (36) mindestens eine Wicklung eines Stators und mindestens eine Wicklung eines Rotors aufweist, und dass vorzugsweise zumindest eine Wicklung entweder zwei unterschiedliche Einzelentwicklungen oder einen Abgriff aufweist.

6. Fahrzeug nach einem der vorangegangenen Ansprüche, **dadurch gekennzeichnet, dass** mindestens ein Spannungsfühler vorgesehen ist, der mit einer elektrischen Zuleitung des Motors (36) oder des Konverters (38) verbunden ist und elektrisch am Steuergerät (60) angeschlossen ist, und dass dann, wenn der Spannungsfühler eine elektrische Netzspannung in der Spannungszuleitung (70) erfasst, das Steuergerät den 2. Betriebszustand vorgibt.

7. Fahrzeug nach einem der vorangegangenen Ansprüche, **dadurch gekennzeichnet, dass** im Konverter (38) eine Ladeelektronik für die Hochvoltbatterie (42) untergebracht ist.
